Europäisches Patentamt

European Patent Office

Office européen des brevets

(11) Numéro de publication : **0 325 073 B1**

(12) **FASCICULE DE BREVET EUROPEEN**

(45) Date de publication du fascicule du brevet :
12.08.92 Bulletin 92/33

(51) Int. Cl.⁵ : **F16C 35/077**

(21) Numéro de dépôt : **88403306.9**

(22) Date de dépôt : **23.12.88**

(54) **Dispositif de montage pour palier.**

(30) Priorité : **23.12.87 FR 8718080**

(43) Date de publication de la demande :
**26.07.89 Bulletin 89/30**

(45) Mention de la délivrance du brevet :
**12.08.92 Bulletin 92/33**

(84) Etats contractants désignés :
**DE FR GB IT NL**

(56) Documents cités :
**DE-C- 859 547
US-A- 3 035 878
US-A- 4 226 485**

(73) Titulaire : **SOCIETE EUROPEENNE DE PROPULSION
24 rue Salomon de Rothschild
F-92150 Suresnes (FR)**

(72) Inventeur : **Fournier, Jean-Pierre
20 Allée du Clos Dieu
F-27630 Ecos (FR)**
Inventeur : **Turin, Gilles
50, Rue Sainte Catherine
F-27200 Vernon (FR)**

(74) Mandataire : **Clanet, Denis et al
Cabinet Beau de Loménie 55, rue d'Amsterdam
F-75008 Paris (FR)**

**Description**

La présente invention concerne un dispositif de montage pour deux paliers supportant un arbre tournant à l'intérieur d'un boîtier.

Dans la description qui va suivre et les revendications, le terme palier est utilisé pour désigner aussi bien des paliers à roulements ou des paliers à billes, et le terme roulement doit être compris comme générique, à la fois de roulements et de billes.

Dans le montage d'un arbre tournant qui peut être soumis à des charges axiales, il est nécessaire d'imprimer une précharge axiale aux paliers qui supportent l'arbre, afin d'éviter que les roulements et les pistes de l'un des paliers ne se séparent lorsque la charge axiale supportée par ce palier devient nulle ou négative.

Ceci est habituellement réalisé en dimensionnant les pièces qui assurent le montage des paliers en fonction de la propre raideur de chacune des pièces constituant le dispositif.

Cependant, on constate en pratique que lorsque le dispositif comprend deux paliers identiques, la charge axiale maximale qui peut être imprimée sur l'arbre avant que l'un des paliers ne devienne séparé, est au mieux 2, 8 fois la précharge axiale. De plus, un tel dispositif est extrêmement sensible aux conditions externes, en particulier la température, ainsi qu'aux conditions internes, en particulier l'usure des pistes, de sorte que les performances d'un tel dispositif sont relativement médiocres.

Il est connu du document FR-A-2 476 407 ou du document US-A-4 226 485 d'assembler l'un des paliers à l'aide d'une membrane entretoise s'étendant entre la piste externe du palier et le boîtier, cette membrane entretoise ayant une grande raideur radiale et une flexibilité axiale prédéterminée, ce qui permet d'imprimer une précharge axiale prédéterminée sur le palier.

Un tel montage est moins sensible aux variations dimensionnelles provoquées par la chaleur qu'un montage rigide, mais les charges axiales maximales qui peuvent être appliquées avant que le palier ne se sépare diffèrent largement selon le sens d'application de la charge. En outre, la flexibilité axiale résultante du montage est différente selon le sens de la charge axiale appliquée. Pour ces raisons, ce type de montage est limité à des appareils dans lesquels la direction de la charge axiale demeure constante en fonctionnement.

Le document DE-A-859 547 enseigne de monter les deux pistes extérieures des paliers au moyen de deux membranes flexibles annulaires. Toutefois, les deux membranes sont disposées à chaque extrémité du palier. Il en résulte qu'elles sont soumises à des conditions d'environnement différentes.

La présente invention concerne un dispositif de montage de deux paliers supportant un arbre dans un boîtier, chacun desdits paliers ayant une piste interne fixée à l'arbre et une piste externe, le dispositif comprenant deux organes entretoises en forme de membrane ayant une bordure interne fixée sur la piste externe d'un palier respectif, et une bordure externe fixée à l'intérieur du boîtier, lesdites membranes entretoises présentent une grande raideur radiale et une flexibilité axiale prédéterminée, caractérisé en ce que les deux membranes sont situées au voisinage l'une de l'autre, dont il résulte que les deux membranes sont soumises à des conditions environnantes pratiquement identiques, les bordures externes des deux membranes étant fixées à l'intérieur du boîtier au voisinage l'une de l'autre, la bordure interne de l'une des membranes étant fixée à la piste externe d'un premier palier, et en ce que le dispositif comprend en outre un fourreau tubulaire allongé entourant ledit arbre, ledit fourreau ayant une première partie d'extrémité fixée à la bordure interne de la second membrane et une seconde partie d'extrémité fixée à la piste externe de l'autre palier.

De plus, une membrane de centrage est montée entre la partie d'extrémité opposée du fourreau et le boîtier, ladite membrane de centrage présentant une grande raideur radiale, mais une raideur axiale négligeable, dans la mesure où son seul rôle est de maintenir le centrage du palier, en évitant que sa propre raideur axiale n'interfère avec la flexibilité axiale des deux membranes entretoises.

D'autres détails et avantages de l'invention apparaîtront clairement à la lecture de la description qui va suivre, en se référanx aux dessins annexés, dans lesquels :

– la figure 1 est une coupe schématique d'un dispositif de l'état de la technique, pour la montage de deux paliers supportant un arbre tournant,
– la figure 2 est un graphe illustrant les relations entre les charges axiales supportées par les paliers et les déplacements axiaux de l'arbre dans le montage de la figure 1,
– la figure 3 est une coupe schématique d'un second dispositif de montage connu de l'état de la technique,
– la figure 4 est un graphe similaire à celui de la figure 2, et se rapportant au montage de la figure 3,
– la figure 5 est une coupe schématique d'un montage conforme à la présente invention,
– la figure 6 est un graphe semblable à ceux des figures 2 et 4, et se rapportant au montage de la figure 5, et
– la figure 7 est une coupe d'un mode de réalisation de l'invention.

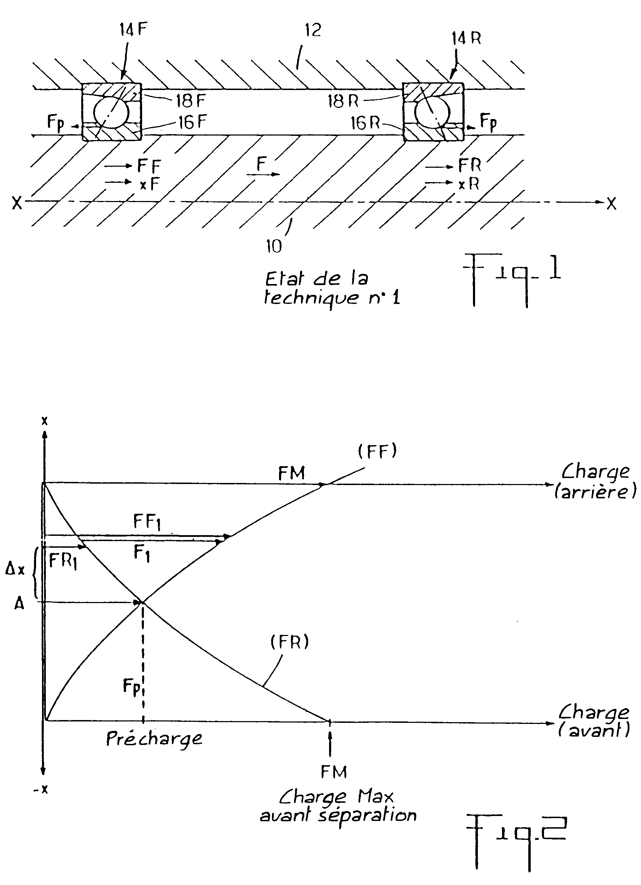

Comme il est connu de l'état de la technique et illustré à la figure 1, un dispositif de montage relativement rigide, d'un arbre 10 tournant autour d'un axe X-X et monté à l'intérieur d'un boîtier 12 est assuré au moyen de deux paliers 14F et 14R. Chaque palier comporte une piste interne 16F, 16R fixée directement sur l'arbre 10 et une piste externe 18F, 18R fixée directement à l'intérieur du boîtier 12.

Les dimensions axiales des composants et leurs caractéristiques sont choisies de manière à exercer sur les paliers une précharge axiale Fp, qui, en l'absence de toute charge axiale sur l'arbre 10 est appliquée également sur les deux paliers 14F et 14R.

Lorsqu'une charge axiale F est appliquée sur l'arbre 10, par exemple dans la direction de la flèche à la figure, cette charge augmente la charge axiale Fp supportée par le palier avant 14F et diminue corrélativement la charge axiale FR supportée par le palier arrière 14R et l'arbre étant déplacé axialement sur une distance $\Delta x$ à partir de sa position d'équilibre initiale.

Au delà d'une charge maximale FM, la charge axiale supportée par le palier arrière 14R devient nulle et les pistes et les rouleaux de ce palier se séparent, ce qui est nuisible au fonctionnement.

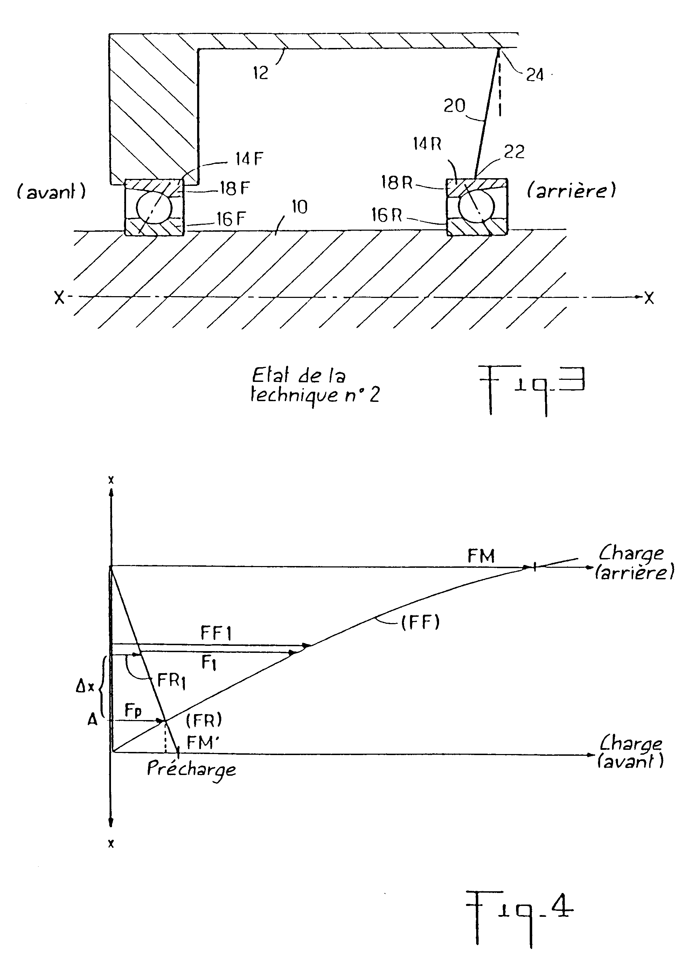

Les graphes de la figure 2 contiennent les courbes expérimentales illustrant les relations entre les charges axiales (FF) et (FR) supportées par les paliers avant et arrière 14F et 14R respectivement, en fonction de la charge axiale appliquée à l'arbre 10, ou corrélativement du déplacement axial $\Delta x$ de l'arbre, à partir de sa position initiale A.

Les charges sont portées en abscisses et les déplacements en ordonnées, les déplacements positifs en direction de la droite à la figure 1 étant orientés vers le haut et les déplacements négatifs en direction de la gauche étant orientés vers le bas.

On notera que l'arbre occupe initialement une position équilibrée désignée par le point à l'origine A, et les charges axiales sur les paliers sont toutes deux égales à Fp, dont la mesure est donnée par la longueur du segment horizontal entre le point A et l'intersection des courbes (FF) et (FR).

Lorsqu'on applique une charge axiale F1, l'arbre est déplacé sur une distance axiale $\Delta x$ et les charges axiales encaissées par les paliers deviennent FF1 et FR1, tel que FF1 - F1 = FR1.

Au delà d'une certaine limite, FR devient nulle et les pistes et les roulements du palier 14R se séparent. Dans cette situation, la charge axiale maximale FM est égale à FF et des expériences pratiques ont montré que FM = 2,8 Fp.

Cependant, ce type de montage est extrêmement sensible à divers facteurs, parmi lesquels la précision des dimensions axiales des divers composants du montage et la température ambiante. En effet, les composants sont réalisés en divers matériaux ayant des coefficients d'expansion thermique différents et de faibles variations de température peuvent provoquer des variations importantes de la précharge axiale Fp. Ainsi, la charge axiale maximale FM ne peut être déterminée de façon précise et fiable.

De plus, des variations indésirables de la position axiale $\Delta x$ de l'arbre peuvent se produire, telles que des variations provoquées par l'usure des pistes de paliers ou par l'entrée d'impuretés dans les paliers.

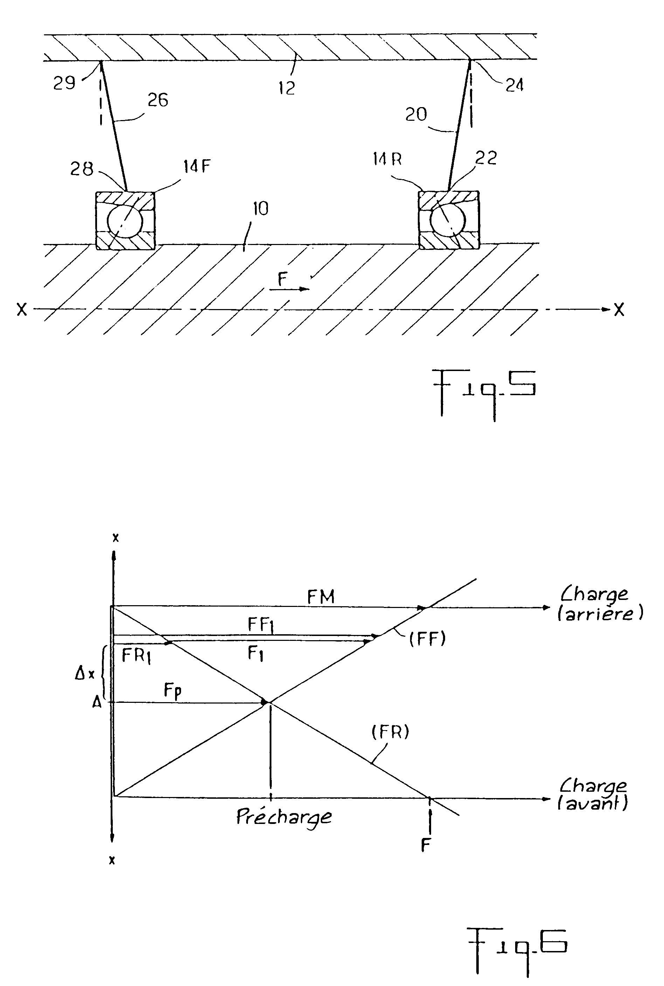

Selon un second dispositif de l'état de la technique connu du document FR - A - 2 476 407 et illustré schématiquement à la figure 3, le palier arrière 14R n'est pas fixé directement sur le boîtier 12, mais au moyen d'une membrane entretoise 20.

La membrane 20 est une pièce plane, en forme de disque comportant une bordure interne 22 fixée à la piste externe 18R du palier arrière 14R et une bordure externe 24 fixée à l'intérieur du boîtier 12. De plus, la membrane entretoise présente une grande raideur radiale et une flexibilité axiale prédéterminée.

Grâce à sa grande raideur radiale, la membrane entretoise 20 maintient un centrage pratiquement parfait du palier 14 et donc de l'arbre 10 à l'intérieur du boîtier 12.

Grâce à sa flexibilité axiale prédéterminée, tout déplacement axial de la bordure interne de la membrane en éloignement du plan défini par la membrane dans sa condition de repos engendre une précharge Fp appliquée aux pistes externes 18F, 18R des paliers 14F, 14R.

A partir du point A, représentatif de la position équilibrée de l'arbre, en l'absence de charges axiales, l'application d'une charge axiale F1 provoque un déplacement axial de l'arbre sur une distance $\Delta x$ et une modification des charges axiales FF1 et FR1 encaissées par les paliers 14F et 14R.

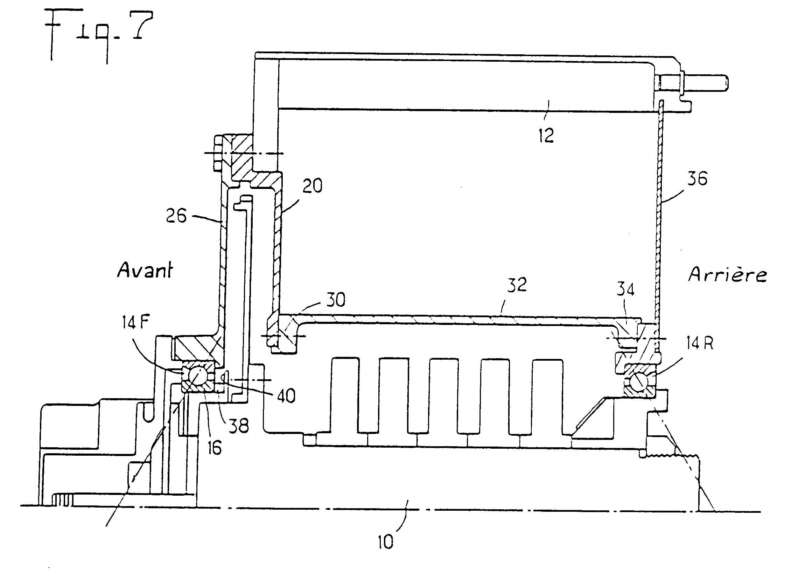

Comme illustré dans le graphe de la figure 4, la charge axiale maximale FM au delà de laquelle les pistes et les rouleaux du palier arrière 14R se séparent, ou en d'autres termes la charge axiale FR devient nulle, est beaucoup plus élevée que dans le dispositif précédent, pour une même précharge Fp.

Bien entendu, la description qui précède vaut pour les charges axiales appliquées dans le sens du roulement avant vers le roulement arrière, c'est-à-dire vers la droite à la figure 3.

Pour les efforts axiaux appliqués dans la direction opposée, la charge maximale FM au delà de laquelle les pistes et les rouleaux du palier avant 14F se séparent, soit lorsque FF devient nulle et beaucoup plus faible.

Conformément à la présente invention, comme illustré schématiquement à la figure 5, les deux paliers 14F, 14R sont montés par l'intermédiaire de membranes entretoises 20 et 26 qui possèdent toutes deux les mêmes caractéristiques que décrit ci-avant.

Ainsi, lorsque les bordures internes 22, 28 des membranes entretoises sont déformées en direction l'une de l'autre à partir de leur position de repos, l'arbre 10 s'établit dans une position équilibrée, désignée par A à la figure 6 sensiblement symétrique par rapport aux deux courbes (FF) et (FR), de telle sorte que les deux paliers sont soumis à la même précharge axiale Fp.

Comme dans les cas précédents, l'application d'une charge axiale F1 se traduit par un déplacement axial de l'arbre sur une distance $\Delta x$ et une variation des charges axiales FF1 et FR1 encaissées par le palier avant et arrière 14F, 14R, et la charge axiale maximale FM au delà de laquelle les pistes et les rouleaux de l'un des paliers 14R se séparent étant égale à FF.

Dans ce mode de réalisation, on observe que la réaction à une charge axiale appliquée dans le sens opposé est symétrique.

En d'autres termes, la charge axiale maximale qui peut être appliquée est la même indépendamment de la direction et la flexibilité axiale résultante du dispositif de montage est identique dans les deux sens, tant que la charge axiale maximale n'est pas atteinte.

Dans la forme de réalisation avantageuse de l'invention, illustrée à la figure 7, les deux membranes entretoises 20, 26 sont situées au voisinage l'une de l'autre à la même extrémité du boîtier 12. La membrane avant 26 est fixée directement à la piste externe 18F du palier avant 14F, tandis que la membrane arrière 20 est montée sur une partie d'extrémité 30 d'un fourreau tubulaire allongé 32 qui entoure l'arbre 10 et s'étend axialement jusqu'à la piste externe 18R du palier arrière 14, la partie d'extrémité opposée 34 du fourreau étant fixée à cette piste externe 18R.

Avantageusement, les bordures externes 24, 29 des membranes 20, 26 sont en contact mutuel et comportent des formes d'emboîtement complémentaires qui assurent leur positionnement axial et radial précis l'une par rapport à l'autre.

Grâce à ce montage, les deux membranes entretoises 20, 26 sont situées dans des conditions d'environnement pratiquement identiques et seront affectées de manière similaire, notamment vis-à-vis de la température.

Naturellement, le palier arrière 14R doit être centré vis-à-vis du boîtier 12 et ceci est assuré au moyen d'une troisième membrane 36, ou membrane de centrage, qui possède une grande raideur radiale, mais au contraire une raideur axiale négligeable, ce qui permet à la membrane de centrage 36 de suivre pratiquement librement les déplacements axiaux de l'arbre 10, sans exercer des forces axiales indésirables sur le palier arrière 14R et/ou l'arbre 10.

Ce mode de réalisation est tout particulièrement destiné au montage d'arbres rotatifs dans des appareils qui sont soumis à des températures très différentes à leurs deux extrémités. Les membranes entretoises seront alors placées préférence à celles des extrémités où règne la température la plus faible.

Dans ce mode de réalisation, les moyens destinés à imposer une déformation initiale précise aux membranes entretoises 26, 20 consistent en une bague 38, emprisonnée entre la piste interne 16F du palier avant et un épaulement 40 de l'arbre. L'épaisseur axiale de la bague 38 est telle que la membrane entretoise est déformée, par rapport à sa condition au repos, d'une valeur prédéterminée avec précision, dont il résulte que la précharge axiale exercée par les membranes entretoises 26, 20 sur les paliers 14F, 14R a une valeur prédéterminée avec précision.

De préférence, on procède tout d'abord à un assemblage à blanc de tous les composants à l'exception de la bague, les membranes entretoises étant dans leur condition au repos. La largeur de l'espace axial séparant la piste interne du palier avant et l'épaulement correspondant de l'arbre est mesurée avec précision.

La bague est ensuite confectionnée à la demande, à une épaisseur totale égale à la largeur de l'espace axial diminué de la valeur prédéterminée correspondant à la déformation axiale prédéterminée désirée pour les membranes entretoises.

Les composants, y compris la bague sont ensuite assemblés.

On notera que les membranes entretoises peuvent avoir des formes différentes de la forme plane en forme de disque illustrée. En particulier, les membranes entretoises peuvent avoir une forme tronconique avec un angle au sommet très ouvert. Selon une autre variante non représentée, les membranes peuvent avoir une forme généralement plane et être munies d'ondulations annulaires. L'avantage d'une forme simple de disque plan réside dans le fait que les caractéristiques physiques de la membrane, en particulier sa flexibilité axiale peuvent être facilement déterminées au moyen de modèles mathématiques.

La prédicabilité des résultats obtenus au moyen de tels modèles peut être améliorée au moyen d'une sélection adéquate des matériaux utilisés pour fabriquer les membranes.

Egalement, le choix du matériau utilisé pour fabriquer les membranes est l'un des paramètres sur lesquels on peut agir lorsqu'on conçoit un assemblage pour lequel on souhaite une flexibilité aixale prédéterminée.

Parmi les autres paramètres sur lesquels on peut agir afin d'obtenir une flexibilité axiale prédéterminée désirée sont l'épaisseur des membranes et leurs diamètres interne et externe.

Enfin, la présente invention ne se limite pas au montage d'un arbre rotatif à l'intérieur d'un boîtier fixe, mais s'applique également au montage d'un boîtier tournant autour d'un axe fixe, comme il apparaîtra à un homme de métier.

## Revendications

1. Dispositif de montage de deux paliers (14F, 14R) supportant un arbre (10) à l'intérieur d'un boîtier (12), chacun desdits paliers ayant une piste interne (16F, 16R) fixée à l'arbre et une piste externe (18F, 18R), le dispositif comprenant deux organes entretoises en forme de membrane (20, 26) ayant une bordure interne (22, 28) fixée sur la piste externe (18F, 18R) d'un palier respectif, et une bordure externe (24, 29) fixée à l'intérieur du boîtier, lesdites membranes entretoises présentent une grande raideur radiale et une flexibilité axiale prédéterminée, caractérisé en ce que les deux membranes sont situées au voisinage l'une de l'autre, dont il résulte que les deux membranes sont soumises à des conditions environnantes pratiquement identiques, les bordures externes des deux membranes étant fixées à l'intérieur du boîtier (12) au voisinage l'une de l'autre, la bordure interne (28) de l'une des membranes (26) étant fixée à la piste externe (18F) d'un premier palier (14F), et en ce que le dispositif comprend en outre un fourreau tubulaire allongé (32) entourant ledit arbre (10), ledit fourreau ayant une première partie d'extrémite (30) fixée à la bordure interne (22) de la second membrane (20) et une seconde partie d'extrémité (34) fixée à la piste externe (18R) de l'autre palier (14R).

2. Dispositif selon la revendication 1, caractérisé en ce qu'il comprend en outre une membrane de centrage (36) présentant une bordure externe fixée à l'intérieur du boîtier et une bordure interne fixée à la seconde partie d'extrémité (34) du fourreau (32), ladite membrane de centrage présentant une grande raideur radiale et une raideur axiale négligeable.

3. Dispositif selon la revendication 1, caractérisé en ce que lesdites membranes entretoises ont la forme de disques annulaires plats.

4. Dispositif selon la revendication 1, caractérisé en ce que lesdites membranes entretoises sont tronconiques.

5. Dispositif selon la revendication 1, caractérisé en ce que lesdites membranes ont la forme de disques annulaires généralement plats et munis d'ondulations circulaires.

6. Dispositif selon la revendication 1, caractérisé en ce que ledit arbre est fixe et ledit boîtier est rotatif.

## Patentansprüche

1. Vorrichtung zum Montieren von zwei Lagern (14F, 14R), die eine Welle (10) im Inneren eines Gehäuses (12) stützen, wobei jedes der Lager eine Innenbahn (16F, 16R) aufweist, die an der Welle befestigt ist, und eine Außenbahn (18F, 18R) aufweist, wobei die Vorrichtung zwei Verstärkungsorgane in Form von Membranen (20, 26) aufweist, die einen inneren Rand (22, 28) aufweisen, der auf der Außenbahn (18F, 18R) eines entsprechenden Lagers befestigt ist, und einen äußeren Rand (24, 29) aufweisen, der am Inneren des Gehäuses befestigt ist, wobei die Verstärkungsmembranen eine große radiale Steifigkeit und eine vorbestimmte axiale Flexibilität aufweisen, dadurch gekennzeichnet, daß die beiden Membranen in der nähe zueinander angeordnet sind, woraus resultiert, daß die beiden Membranen praktisch identischen Umgebungsbedingungen unterworfen sind, wobei die Außenränder der beiden Membranen innen am Gehäuse (12) in der Nähe zueinander befestigt sind, wobei der innere Rand (28) einer der Membranen (26) an der Außenbahn (18F) eines ersten Lagers (14F) befestigt ist, und daß die Vorrichtung weiterhin ein längliches Futteral (32) aufweist, das die Welle (10) umgibt, wobei das Futteral einen ersten Endbereich (30) aufweist, der am Innenrand (22) der zweiten Membran (20) befestigt ist, und einen zweiten Endbereich (34) aufweist, der an der Außenbahn (18R) des anderen Lagers (14R) befestigt ist.

2. Vorrichtung nach Anspruch 1, dadurch gekennzeichnet, daß sie weiterhin eine Zentrierungsmembran (36) aufweist, die einen Außenrand aufweist, der innen am Gehäuse befestigt ist, und einen inneren Rand aufweist, der am zweiten Endbereich (34) des Futterals (32) befestigt ist, wobei die Zentrierungsmembran eine große radiale Steifigkeit und eine geringe axiale Steifigkeit aufweist.

3. Vorrichtung nach Anspruch 1, dadurch gekennzeichnet, daß die Verstärkungsmembranen die Form von ebenen ringförmigen Scheiben haben.

4. Vorrichtung nach Anspruch 1, dadurch gekennzeichnet, daß die Verstärkungsmembranen stumpfförmig ausgebildet sind.

5. Vorrichtung nach Anspruch 1, dadurch gekennzeichnet, daß die Membranen die Form im allgemeinen ebener, ringförmiger Scheiben aufweisen und mit kreisförmigen Wellenlinien versehen sind.

6. Vorrichtung nach Anspruch 1, dadurch gekennzeichnet, daß die Welle feststeht und das Gehäuse drehbar ist.

## Claims

1. Device for mounting two bearings (14F, 14R) supporting a shaft (10) inside a housing (12), each of said bearings having an inner race (16F, 16R) fixed to the shaft and an outer race (18F, 18R), the device comprising two bracing members in the form of a membrane (20, 26) having an inner edge (22, 28) fixed to the outer race (18F, 18R) of a respective bearing, and an outer edge (24, 29) fixed to the inside of the housing, said bracing membranes having a high radial rigidity and a predetermined axial flexibility, characterised in that the two membranes are situated in the vicinity of each other, the result of which is that the two membranes are subject to practically identical ambient conditions, the outer edges of the two membranes being fixed to the inside of the housing (12) in the vicinity of each other, the inner edge (28) of one of the membranes (26) being fixed to the outer race (18F) of a first bearing (14F), and in that the device further comprises an elongate tubular sleeve (32) surrounding said shaft (10), said sleeve having a first end portion (30) fixed to the inner edge (22) of the second membrane (20) and a second end portion (34) fixed to the outer race (18R) of the other bearing (14R).

2. Device according to claim 1, characterised in that it further comprises a centring membrane (36) comprising an outer edge fixed to the inside of the housing and an inner edge fixed to the second end portion (34) of the sleeve (32), said centring membrane having a high radial rigidity and a negligible axial rigidity.

3. Device according to claim 1, characterised in that said bracing membranes have the shape of flat annular discs.

4. Device according to claim 1, characterised in that said bracing membranes are frustoconical.

5. Device according to claim 1, characterised in that said membranes have the shape of generally flat annular discs provided with circular undulations.

6. Device according to claim 1, characterised in that said shaft is fixed and said housing is rotary.

14 F
12
14 R
18 F
18 R
$F_p$
16 F
16 R
$F_p$
→ F F
→ F
→ F R
→ x F
→ x R
X
X
10

Etat de la
technique n° 1

Fig. 1

x
(FF)
FM
Charge
(arrière)
$FF_1$
$F_1$
$\Delta x$
$FR_1$
A
(FR)
$F_{p_1}$
Charge
(avant)
Précharge
FM
-x
Charge Max
avant séparation

Fig. 2

7

(avant)    (arrière)

Etat de la
technique n° 2

Fig-3

Fig-4

Fig.5

Fig.6

Fig. 7

EP 0 325 073 B1